# EUROPEAN PATENT SPECIFICATION

(11) **EP 1 329 034 B1**
(45) Date of publication and mention of the grant of the patent: **20.01.2010**
(21) Application number: 01940529.9
(22) Date of filing: 25.05.2001
(51) Int. Cl.: H04B 7/00

(54) **COMMUNICATIONS SYSTEM AND METHOD OF ADMINISTERING CONNECTIONS THEREIN**
KOMMUNIKATIONSSYSTEM UND VERFAHREN ZUR VERBINDUNGSVERWALTUNG
SYSTEME DE COMMUNICATION ET PROCEDE PERMETTANT DE GERER LES CONNEXIONS DANS CE SYSTEME

(30) Priority: 27.05.2000 GB 0013051
(43) Date of publication of application: 23.07.2003
(73) Proprietor: MOTOROLA, INC., Schaumburg, IL 60196 (US)
(72) Inventor: OWEN, Ray, Bath, Wiltshire BA1 3DY (GB); ANDERSON, Nicholas, Swindon, Wiltshire SN4 9JS (GB); BENN, Howard, Swindon, Wiltshire SN5 5AJ (GB)
(74) Representative: Jepsen, René Pihl
(86) International application number: PCT/EP2001/006003
(87) International publication number: WO 2001/093454

(56) References cited:
- WO-A-00/27158
- WO-A-98/54853
- US-A- 5 697 055
- US-A- 5 917 811
- US-A- 5 999 816

## Description

### Background to the Invention

This invention relates, in general, to wideband or "spread spectrum" cellular communication systems, such as those employing code division multiple access (CDMA), and to the control, management and set-up of calls therein. The present invention is particularly, but not exclusively, applicable to third generation communication systems employing multiple air-interfaces.

### Summary of the Prior Art

In a cellular communications system, a plurality of base stations provide radio telecommunication services to a plurality of subscriber units, principally mobile units moving at different velocities and in different radio propagation environments. Each base station defines a particular geographical area or cell proximate to the base station, with these cells combining to produce an extensive coverage area. The communications link from the base station to a mobile subscriber unit is referred as to the down-link. Conversely, the communications link from a mobile subscriber unit to the base station is referred to as the up-link.

Multiple access techniques permit simultaneous transmissions from several mobile subscriber units to a single base station over a plurality of communications channels. Some channels are used for carrying traffic while other channels (which may be logical or dedicated channels) are used for transferring control information, such as call paging, between the base station and the subscriber units. Some examples of multiple access techniques are frequency division multiple access (FDMA), time division multiplexing/multiple access (TDM, TDMA) and code division multiple access (CDMA). A CDMA-type system employs spread spectrum signaling.

One of the communication protocols proposed for use in the Universal Mobile Telephone System (UMTS) is wideband code-division multiple access (W-CDMA). In contrast to TDM-based cellular systems, a CDMA-based system has a universal frequency re-use that allows frequencies to be used across the entire network, i.e. there is a frequency re-use of one. Such CDMA-based systems operate by virtue of the fact that a single carrier frequency supports a number of communication resources that are structured from discrete, coded sequences. More specifically, each channel is comprised from a unique coded sequence of "chips" that are selected from a relatively long pseudo-random spreading sequence (typically many millions of bits in length). A communication device has access to an information-bearing channel by virtue of a communication device having particular and detailed knowledge of a specific code that identifies the specific bits used by the information-bearing channel. Individual users to the system therefore use a common radio frequency (RF) but are separated by the individual spreading codes. In the down-link each base station is assigned a single spreading code. Each of the geographical channels is then assigned a separate channelisation code; in UMTS the orthogonal variable spreading factor (OSVF) code set is used. In the up-link each mobile has its own unique long spreading code assigned.

Information (such as voice, data or video) is spread across many chips of the spreading sequence on a unique basis, with a processing gain of the system determined by the number of chips required to construct a single data bit. In this way, less than one bit of information is transmitted per chip. Essentially, the processing gain is a ratio defined by the number of chips required per symbol/bit (generally fixed for the network) against a rate at which the underlying information is transmitted. In general, it is therefore better that a receiver is subject to high processing gain in order that it is better able to distinguish each user signal against a background of other-user generated interference and system noise.

CDMA-based systems therefore inherently operate in an interference environment because many channels utilise the same carrier frequency, with individual channels merely differing from one another in terms of their uniquely defined coded sequences. However, CDMA-based systems become statistically efficient for large populations of users, and therefore present an attractive and more efficient alternative to FDM-based systems.

Two categories of spread spectrum communications are: i) direct sequence spread spectrum (DSSS); and ii) frequency hopping spread spectrum (FHSS). In an operational sense, as described, the spectrum of a signal is spread in DSSS (defined in TIA-EAI standard IS-95) by multiplying it with a wide-band pseudo-random code generated signal. It is therefore essential that the spreading signal be precisely known by an addressed/receiving unit in order for de-spreading of the (coded) signal to occur.

One feature of the current GSM system, which is envisaged for UMTS, allows the transceivers in the base station and subscriber unit to adjust their power output to take into account the geographical distance between them. The closer the subscriber unit is to the base station's transceiver, the less power it and the base station's transceiver will be required to transmit. This feature saves battery power in the subscriber unit and therefore helps to reduce interference effects. Both up-link and down-link power settings can be controlled independently. Initial power settings for the subscriber unit, along with other control information, are set by the information provided on a broadcast control channel (BCCH) for a particular cell. The base station controls the transmit power of both the subscriber unit and the base station's transceiver. The base station monitors the power in up-link transmissions received from the subscriber unit, and the power received in down-link transmissions from the base station is monitored by the subscriber unit and, generally, then reported to the base station. Using these measurements, the power of both the subscriber unit and the base station's transceiver can be adjusted accordingly to reflect optimum system performance and desired quality of service (QoS). The broadcast control channel is transmitted by the base station's transceiver at all times and at constant power. In addition to a power control indicator, the BCCH also carries other information such as cell identity, a list of frequencies used in the cell, and a list of neighbouring cells to be monitored by the subscriber unit.

Accurate reverse link power control is a critical element of CDMA systems as the spreading codes are not orthogonal on the reverse link and any errors in power control produces interference that directly reduces system capacity.

By way of intermediate summary, although CDMA-based systems can benefit from the use of multiple carriers within specific cells and generally within the system as a whole, CDMA effectively provides a homogenous carrier frequency environment for an area served by a multiplicity of cells. As a consequence, the interference between neighbouring cells is tightly related. This can be contrasted with frequency based systems, such as the global system for mobile communication (GSM), where carrier frequency re-use in adjacent or near-adjacent cells is restricted to avoid co-channel and adjacent channel interference. GSM, in fact, utilises a mix of frequency division duplex (FDD) and time division multiplexing (TDM) protocols to provide dedicated, duplex-spaced up-link and down-link channels on allocated time-slot resources of a frame. For UMTS and CDMA2000, an FDD-CDMA protocol has been adopted as an air interface standard.

In a CDMA-based system, it is necessary to restrict a composite power of all interfering signals since the processing gain is generally a constant value for a user transmitting at a constant information rate. The restriction of power is such that the processing gain for each user is sufficient for each desired signal to be extracted from all other interfering signals with adequate signal integrity. CDMA-based systems (and the like) utilise power control functions to control the power transmitted by each user (whether this is controlled by the user or administered by the network) such that a serving cell-site should ideally receive an incident signal at an appropriate power level relative to all other interfering signals. Generally, the serving cell will be the cell in which the user's subscriber unit (whether this is a mobile or a terminal) is located. Consequently, power control generally renders subscriber unit transmission at a relatively low power level.

In some instances, so-called soft-handover algorithms are employed. Soft-handover relates to up-link communications from a subscriber unit within a specific cell, wherein such up-link communications are decoded by multiple base station sub-systems (BSSs) in adjacent (i.e. non-primary) cells. Soft-handover is therefore designed to obviate some need for increasing up-link transmission power since it provides space diversity and consequently a better quality of service (QoS) for a nominally selected transmitted power level. Consequently, in systems that constantly seek to limit an interference environment, soft-handover can provide an improved QoS (e.g. reduced frame erasure rates (FERs) or reduced bit error rates (BERs)) for the same power. CDMA systems are therefore geared to look to soft-handover, if possible.

On a larger scale, as the user moves around the network, so the cell in which the user is located generally changes in order to maintain as low a transmit power as possible, thus attempting to limit overall system interference. Unfortunately, a radio propagation environment constantly varies with time, with a channel between a subscriber unit and a cell site potentially subject to large variations in path loss. Power control functions operate to mitigate such undesirable signal attenuation (i.e. variations in path loss), with the level of attenuation therefore directly adversely affecting quality of service (QoS) to and from a subscriber unit. Moreover, increasing path loss inevitably tends to lead to a corresponding change in subscriber unit transmit power designed to offset the path loss (which increase in power consequently affects overall system interference).

QoS for a given connection is usually defined in terms of target bit error rate (BER), block error rate (BLER) or frame erasure rate (FER). This target will vary as propagation conditions change. For example, a mobile unit's speed and its specific propagation environment will both have a major impact on a signal to interference ratio (SIR) required at the base station to maintain the desired QoS.

The FDD interface, as inferred above, is based on W-CDMA. As such, it is sensitive to power control mismatches in the up-link because of the channel fast fading. Fast fading is caused by the signal arriving at a receiver via a number of different paths. Therefore, in order to achieve maximum up-link capacity in a CDMA system, fast power control loops are required, to speedily set optimal power levels.

An outer power control loop essentially looks to a desired quality of service (QoS) metric for a connection and then maps the desired QoS to what appears to be a corresponding ratio of energy required per information bit to the noise power spectral density level, E_{b}/N₀, for a connection. In other words, the purpose of the outer loop is to set the required Eb/No target to achieve a given QoS, usually defined in terms of bit error rate (BER) or frame erasure rate (FER) targets that must be maintained. As will be understood, E_{b}/N₀ essentially corresponds to a signal to noise (S/N) ratio, with No representing a combined noise and interference measure.

Having set the necessary outer loop target, it is the job of an inner power control loop to maintain the received Eb/No ratio as close as possible to the outer loop target. The loop bandwidth of the outer loop is typically significantly smaller than that of the inner loop since (broadly speaking) its job is to respond to gross changes in the propagation environments which will lead to changes in the operating point of a given connection (to reach the same quality of service). The inner power control loop acts to adjust a subscriber unit's transmission power to counter the so-called near-far problem and to track the E_{b}/N₀ requirement. This simply means adjusting the transmission power of each connection such that the received signal power observed at the base station (or Node B in UMTS context) is *just* sufficient to meet the QoS (Quality of Service) requirement of each particular connection; thereby reducing interference to others in the system.

As will be understood, the actual transmit power of the mobile has a fixed dynamic range dictated by practical size and cost constraints notwithstanding any specified limitations of a communicating standard, such as UMTS. Consequently, the transmit power of, for example, a mobile is constrained to lie somewhere within this fixed dynamic range. If the mobile is situated close to a base station which it is communicating with then the path loss between the mobile and the base should, in general, be low meaning that the transmission power of the mobile to achieve a given SIR can also be low.

A particular problem in CDMA systems occurs when a subscriber unit is affiliated to (or otherwise establishes a connection with) a base station in a cell remote to the geographically nearest ('near-in') base station; with such connection not being subject to any soft-handover process. In other words, an actual geographic allocation of the subscriber unit within its primary cell is such that base-site transmissions thereto from a base station of that primary cell and base stations from nearest neighbour cells may be subject to deep fades.

Consequently, the subscriber unit receives service from a geographically distant ('far-away') base station to overcome such log-normal fading. Consequently, in order to communicate effectively with the far-away base station and to obtain a minimum QoS, the subscriber unit necessarily transmits at a relatively high power (significantly greater than that which would otherwise be set for communication with a near-in base station). Provided that the propagation conditions do not change, this relatively high power transmission situation is acceptable because the near-in base stations and other subscriber units will not receive the energy transmitted by the transmitting subscriber unit (by virtue of the fade). However, if the transmitting subscriber unit camped on the far-away base station suddenly moves out of the fade and, consequently, suddenly appears to the near-in base station, the in-cell interference to the near-in cells will rise dramatically until the transmit power of the transmitting subscriber unit can be brought under control.

Usually, however, in order for the near-in base stations to overcome the practically instantaneous rise in interference caused by loss of fade to the subscriber unit transmitting at relatively high power to the far-away base station, other subscriber units in the vicinity are usually instructed to increase their respective transmit powers to overcome the increased level of interference and maintain an acceptable QoS. The transmitting subscriber unit camped onto the far-away base station will consequently encounter more interference and will, in turn, independently, or be instructed to, increase transmit power. The situation then escalates until the network becomes unstable and needs to be reset. Indeed, the complex radio environment is such that the level of attenuation or fade (and the fade's duration) is indeterminate in the context of a CDMA-type air-interface, and so the near-far problem is particularly concerning to system operators.

The interference that a CDMA subscriber unit can introduce into a CDMA network is therefore much greater than other systems because of its effective unitary frequency reuse and hence tight association between signal transmission levels and interference. Indeed, in W-CDMA, the far-away equalisation of signal quality problem is even greater because of the fixed processing gain (and hence the trade-off of QoS against capacity, throughput and data rates). For example, a device transmitting data at 384kbps appears as forty-eight equivalent voice users and introduces the combined interference of forty-eight voice users (as a consequence of increased data rate being associated with increased transmit powers). Elevated transmit powers required to overcome temporary fading-induced loss of contact with near-in base stations (that are also unable to support soft-handover) can, post-fade, inflict substantial damage to near-in cells and the system as a whole.

U.S. Patents 5,854,785 and 5,920,550 describe CDMA (IS-95-A and B) call set-up procedures, including the establishment of a call from idle mode and they also have some information on neighbour lists. U.S. Patent 5,697,055 discloses a communication system having co-located base stations supporting different air interfaces and U.S. Patent 5,999,816 discloses a mobile assisted hard handoff between communication system.

For completeness, it is known to use discontinuous transmission (or DTX) to reduce interference in both TDMA and CDMA radio transmission systems carrying voice traffic, with DTX acting to switch-off the up-link and down-link transmissions during periods when a speaker is inactive. However, DTX can only applied to speech.

CDMA-based systems must therefore necessarily impose and retain strict power controls on all transmissions, with this being particularly important in relation to transmissions from mobile communication devices. Unfortunately, CDMA systems are prone to operational instability in the face of "rogue mobiles" in close proximity to base station transceivers and which rogue mobiles transmit at high power levels that directly interfere with reception at proximate cell sites. More particularly, as will now be appreciated, high-powered transmissions from the rogue mobile will swamp the universal frequency carrier and therefore corrupt information-bearing chips, with this effect known as the "near-far" problem. Indeed, the near-far problem can ripple-through and potentially unbalance the whole CDMA system to an extent where system-wide failure can result; this is clearly catastrophic for a network operator and must be avoided at all costs.

It is also interesting to note that certain power control algorithms in systems impose a limit on subscriber unit transmission power levels that are below the operational maximum transmit power for the subscriber unit. Consequently, in certain instances, although a power amplifier within a subscriber unit is capable of maintaining a distant connection to a far-away servicing base station (in view of prevalent deep fade conditions to near-in base stations), a call may have to be dropped (or QoS back-off) because of the limit to transmit power. Clearly, this can be unacceptable to a user, and is irksome to an operator since revenue is unnecessarily lost. The limit on subscriber unit transmit power, as will be appreciated, is taken on the basis of a statistical probability that unacceptable levels of system interference are likely to result from transmission above this pre-set ceiling.

Whilst interleaving (such as realised by a TDM, TDMA access mechanism) mitigates the effects of fast changes in a fading environment, power control is generally ineffective for both high speed mobile subscribers and those subscribers deemed stationary (in view of multi-path). Power control is therefore of limited use in offsetting the effects of fading on a band of subscriber units having a range of speeds greater than those considered to be associated with a stationary terminal but less than high speed mobiles moving at speeds of above, say, about twenty metres per second. As indicated, QoS can be maintained at the expense of transmission rate, but this may be unacceptable for calls requiring high bandwidth and calls that cannot tolerate delay for coherent traffic retrieval (such as voice or video).

The relationship between noise rise with cell loading as a function of the minimum transmit power level (allowed for mobiles in the system) is described in the paper "FDD UE minimum transmission power simulation results" - TSGW4#6(99) 395 presented in TSG-RAN Working Group 4 #6, South Queensferry, Scotland (26-29'th July 1999). Noise rise is defined as the rise in total noise power observed in the carrier bandwidth (due to all users connected to the base station plus thermal noise) over background thermally generated noise in the carrier bandwidth (which is irrespective of the number of users). When the noise rise reaches a certain level above thermal noise the transmission power requirements of users connected to the base station rise rapidly to infinity; this is known as the pole capacity of the cell. It is desirable to load as many users onto the system as possible, in other words, it is desirable to load the system as close to pole capacity as possible (although, in practice, only a given fraction of pole loading is achieved to ensure power control stability). Indeed, for a given capacity, the lower the allowed minimum mobile transmit power the lower the noise rise (which means greater system capacity, range and increased mobile battery life).

### Summary of the Invention

According to a first aspect of the invention there is provided a method of controlling transmit power in accordance with claim 1.

The second air-interface may be a spread spectrum service and said at least one air-interface typically includes a narrowband air-interface.

In a preferred embodiment, the method further includes determining path losses associated with at least one type of air-interface supported by different base stations in at least some of the plurality of cells. Moreover, based on the path losses, the method of a preferred embodiment may selectively operate the transceiver unit in an air-interface mode non-common with said at least one air-interface used to assess the interference environment.

In another embodiment, it is preferred that the operating methodology include: timing a duration of path loss events; determining whether the duration of a path loss event is indicative of a fading condition; and operating the transceiver unit in an elevated power transmission mode in response to a determination that the transceiver unit is subject to a fading condition. The elevated power transmission mode is, typically, a spread spectrum mode.

In another embodiment, the method further comprises: commencing communication in a narrowband mode; assessing the interference environment in the narrowband mode; and switching communication to a wideband mode when the interference environment of the narrowband mode is deemed sufficient to support operation of the transceiver unit in the wideband mode.

The interference environment may be assessed in relation to nearby cell broadcast transmissions.

The transceiver unit is typically a subscriber unit and wherein controlling power transmission or power control settings is based on at least one of: a predictive model projecting an effect of an increase in power transmission settings from the transceiver unit in relation to an existing interference environment; and an interference environment presently experienced by the transceiver unit.

Of course, the controlling of power transmission or power control settings can be administered on a system-wide basis from within the infrastructure of the cellular communication system, although the controlling of power transmission or power control settings can be administered by the transceiver unit, principally a subscriber unit.

In another aspect of the present invention there is provided a cellular communication system in accordance with claim 14.

The cellular communication system of a preferred embodiment may also further comprise: means for determining path losses associated with at least one type of air-interface supported by different base stations in at least some of the plurality of cells.

The cellular communication system may include:means for selectively operating subscriber units in an air-interface mode non-common with said at least one air-interface used to assess the interference environment, the means for selectively operating subscriber units responsive to said path losses.

The cellular communication system may include: a timer for timing a duration of path loss events; means for determining whether the duration of a path loss event is indicative of a fading condition; and means for selectively operating subscriber units in an elevated power transmission mode in response to a determination that individual subscribers unit are subject to a fading condition.

In one embodiment, the cellular communication system further comprises: means for commencing communication in a narrowband mode; means for assessing the interference environment in the narrowband mode; and means for switching communication to a wideband mode when the interference environment of the narrowband mode is deemed sufficient to support operation of the transceiver unit in the wideband mode.

In a further aspect of the present invention there is provided a subscriber unit responsive to channel resources supporting a plurality of carrier frequencies assigned to support at least two different air-interfaces, the subscriber unit comprising: a scanning receiver selectively operationally responsive to the plurality of carrier frequencies; means for assessing an interference environment arising from use of at least one air-interface; and means for selecting and controlling power transmission settings within a second air-interface based on inference of propagation conditions that are likely to be experienced within the second air-interface, the inference of propagation conditions based on the assessed interference environment.

A further aspect of the present invention supports a method of operating a subscriber unit responsive to channel resources supporting a plurality of carrier frequencies assigned to support at least two different air-interfaces, the method comprising: scanning the carrier plurality of carrier frequencies; assessing an interference environment arising from use of at least one air-interface; and controlling power transmission or control settings within a second air-interface based on inference of propagation conditions that are likely to be experienced within the second air-interface, the inference of propagation conditions based on the assessed interference environment.

One advantage of the invention is that admission to the CDMA system is based on cellular (GSM) or FDMA/TDMA measurements. As a consequence, CDMA power control is optimised enabling resulting interference to be controlled. The present invention therefore directly addresses the near-far problem associated with near-in deep fades, whilst providing a dynamic mechanism for controlling power in an in-call scenario. Beneficially, within a CDMA network, the effect of interference is reduced and the power control stability is increased in view of their being a heightened understanding within the system, as a whole, of subscriber unit ownership by particular cells within the system.

### Brief Description of the Drawings

Embodiments of the invention are described below, by way of example only, with reference to the following drawings, in which:
FIG. 1 shows a block diagram of a cellular communications system which can be adapted to support the various inventive concepts of the preferred embodiments of the present invention;
FIG. 2 shows the conventional cell plan containing base stations and subscriber units, the figure further illustrating the so-called near-far problem in CDMA systems;
FIG. 3 is a block diagram of a subscriber unit adapted to support the inventive concepts of the preferred embodiments of the present invention;
FIG. 4 is a flow diagram depicting connection control and power management within an air-interface environment according to a preferred operating methodology.

### Detailed Description of a Preferred Embodiment

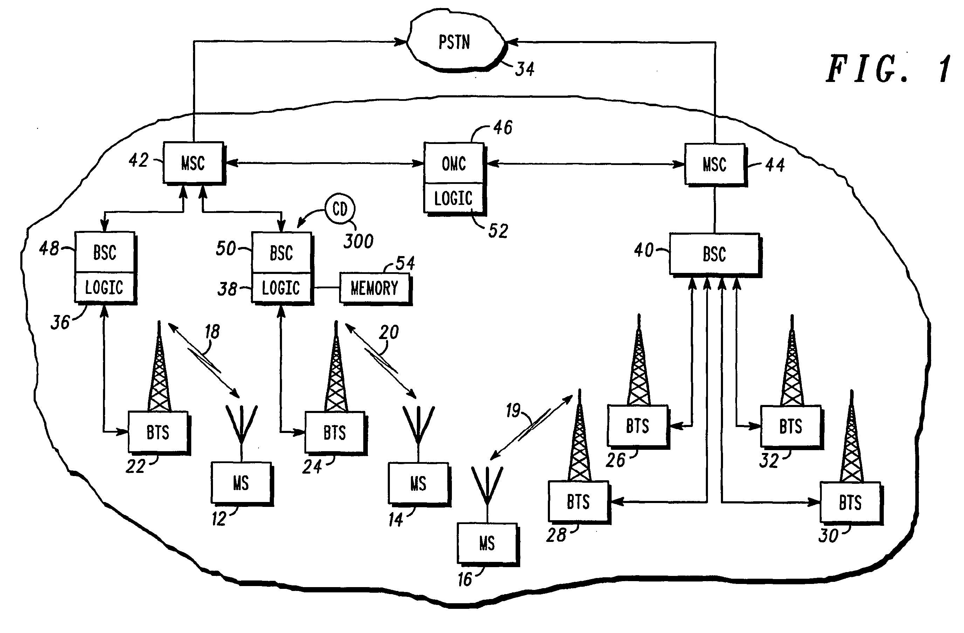

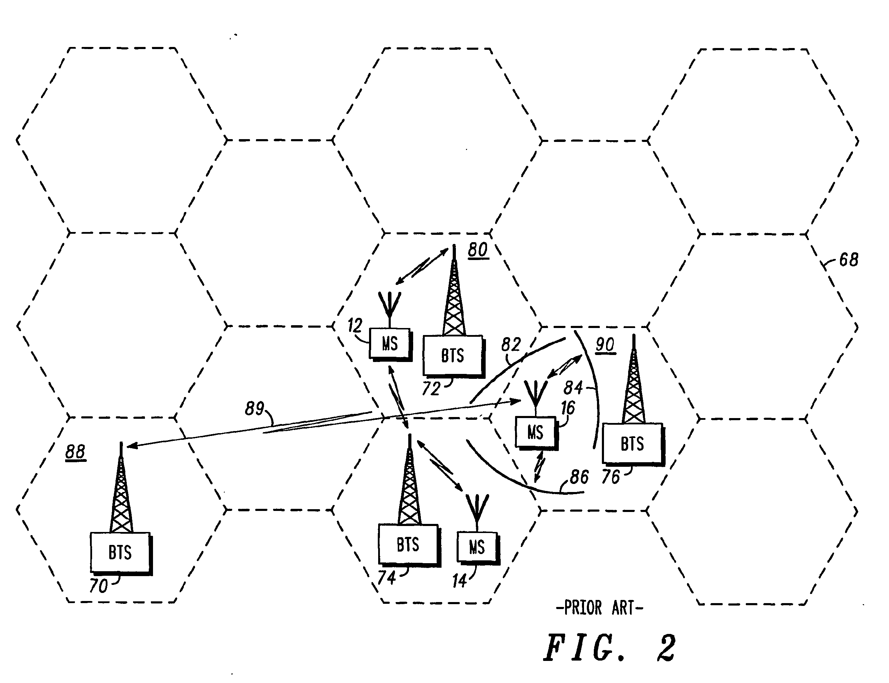

FIG. 1 shows, in outline, a cellular communications system 10 supporting multiple air-interfaces. For example, the communication system 10 may support a GSM communications protocol and a W-CDMA communications protocol. Generally, these air-interface protocols are administered from (ostensibly) co-located base sites individually assigned to specific cells (as shown in FIG. 2).

A plurality of subscriber units, such as a mixture of mobile units (MS) 12-16 and fixed terminals (not shown), communicate over a selected air-interface 18-20 with a plurality of base transceiver stations (BTS) 22-32. The BTSs 22-32 may be connected to a conventional public-switched telephone network (PSTN) 34 through base station controllers (BSCs) 36-40 and mobile switching centres (MSCs) 42-44. Each BTS 22-32 is principally designed to serve its primary cell, with each BTS 22-32 containing one or more transceivers. Each BSC 36-40 may control one or more BTSs 22-32, with BSCs 36-40 generally interconnected through MSCs 42-44. BSCs 36-40 are therefore able to communicate with one another, if desired, to pass system administration information therebetween, with BSCs responsible for establishing and maintaining control channel and traffic channels to serviceable subscriber units affiliated therewith. The interconnection of BSCs therefore allows the cellular communication system to support soft-handover.

Each MSC 42-44 provides a gateway to the PSTN 34, with MSCs interconnected through an operations and management centre (OMC) that administers general control of the cellular system 10, as will be understood. The various systems elements, such as BSCs 36-38 and OMC 46, will include control logic 48-52, with the various system elements usually having associated memory 54 (shown only in relation to BSC 38 for the sake of clarity). The memory typically stores historically compiled operational data as well as in-call data and system information, such as neighbouring cell site lists (i.e. the BA list) and control algorithms.

The cellular communication system 10 may support underlay of a microcellular environment (or the like), with a plurality of micro-cells operationally controllable by a BSC. The micro-cells may operate an identical air-interface to the macrocell, but this need not be the case.

FIG. 2 shows a conventional cell plan 68 containing base station sub-systems (BSSs) 70-76 and subscriber units 12-16. Generally, as will be understood, a subscriber unit is in communication with its nearest BTS (which together with the BSC forms the BSS); this is shown in relation to BSS 72 and mobile station 12 of cell 80. Occasionally, a subscriber unit, such as mobile station 12 of cell 80, may enter soft-handover in which case multiple BSS's provide up-link servicing capabilities to the subscriber unit. In certain instances, deep fades 82-86 prevent communication between a subscriber unit and its nearest neighbouring base stations. Consequently, a distant BSS (e.g. BSS 70 of cell 88) may by necessity have to provide service 89 to a subscriber unit (say MS 16) in cell 90; this potentially gives rise to the near-far problem should the deep fades 82-86 improve.

The BSS 70-76 provide cell sites for co-located communications architectures supporting multiple air-interfaces, such as (but not limited to) CDMA (and derivatives thereof), FDD, TDD, TDM and orthogonal frequency division multiplex (OFDM) and combinations thereof, e.g. GSM.

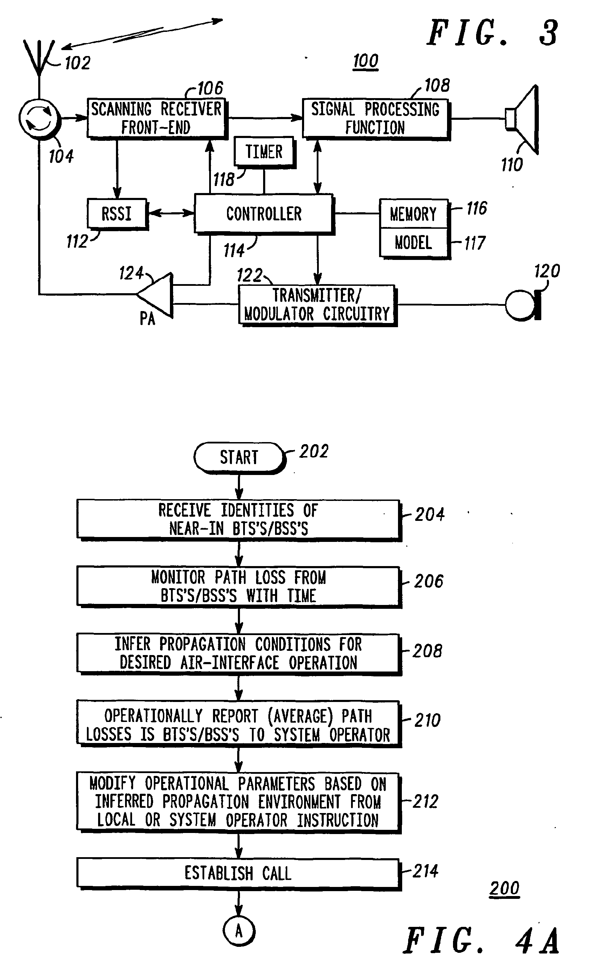

Turning now to FIG. 3, there is shown a block diagram of a subscriber unit 100 adapted to support the inventive concepts of the preferred embodiments of the present invention. The subscriber unit 100 contains an antenna 102 coupled to a duplex filter or circulator 104 providing isolation between receive and transmit chains within the subscriber unit 100. The receiver chain includes scanning receiver front-end circuitry 106 (effectively providing reception, filtering and intermediate or baseband frequency conversion) serially coupled to a signal processing function 108 (providing for example equalisation and demodulation). An output from the signal processing function is provided to a suitable output device 110, such as a speaker or visual display unit (VDU). The receiver chain also includes received signal strength indicator (RSSI) circuitry 112 (shown coupled to the scanning receiver front-end 106, although the RSSI circuitry 112 could be located elsewhere within the receiver chain). The RSSI circuitry is coupled to a controller 114 for maintaining overall subscriber unit control, which controller 114 is also coupled to the scanning receiver front-end circuitry 106 and the signal processing function 108 (generally realised by a digital signal processor, DSP). The controller 114 may therefore receive bit error rate (BER) or frame error rate (FER) data from recovered information. The controller is also coupled to a memory device 116 that stores operating regimes, such as decoding/encoding functions and the like, and data relating to a connection, such as the BA list of neighbouring cell sites and historically compiled in-call and call set-up data (including path loss measurements and timing thresholds defining types of fades). A timer 118 is coupled to the controller 114. The timer 114 is utilised in call-set up and in-call procedures to time fade conditions, as will be described subsequently,

As regards the transmit chain, this essentially includes an input device 120, such as a transducer or other man-machine interface (e.g. a keypad), coupled in series through transmitter/modulation circuitry 122 and a power amplifier 124. The transmitter/modulation circuitry 122 and the power amplifier 124 are operationally responsive to the controller, with an output from the power amplifier coupled to the duplex filter or circulator 104.

Of course, the various components within the subscriber unit 100 can be realised in discrete or integrated component form, with an ultimate structure therefore being merely an arbitrary selection.

Fundamentally, the system of the present invention (when applied to unitary frequency re-use schemes, such as CDMA) preferably tends to an interference limited environment and hence low power transmissions from subscriber units; this may involve the use of soft-handover algorithms to multiple adjacent (and usually near-in) base stations, i.e. BTS-BSC combinations.

The system of the present invention also generally contemplates the effective collocation of different air-interface cell sites, as has now been accepted in 3G telecommunications standards.

The present invention can be applied to both call establishment and in-call scenarios.

The present invention generally requires that cell sites (i.e. BSSs) are capable of communicating with subscriber units using a plurality of different air-interface protocols, such as (but not limited to) CDMA and either an FDM protocol, a TDM protocol or a combination of both. In other words, there is an effective/perceived collocation (in a radio frequency (RF) sense) of BTSs for a plurality of services. The base station may therefore communicate with a subscriber unit using, for example, CDMA and GSM, but alternatively the subscriber unit could be functionally restricted to accept only one of the available services notwithstanding that the subscriber unit has an ability to scan the entire frequency spectrum. However, if subscriber unit operation is limited, then path loss is restricted to absolute measures of signal level (since it is unable to utilise BER/FER data from any incident signal that cannot be demodulated/decoded).

The skilled addressee will recall that, in the GSM system in particular, a subscriber unit is already tasked with measuring levels of received (incident) signals originating from neighbouring base stations in neighbouring cells, thereby to maintain the so-called neighbour list. The neighbour list is used to ensure efficient handover (including mobile assisted handover, MAHO). In the GSM system, the subscriber unit reports measurements on up to six neighbouring cells, in addition to those made on the serving cell. In one embodiment of the present invention use is made of this signal measurement information when determining whether access to the CDMA system can be allowed.

According to a first embodiment of the present invention, by using FDMA/TDMA or GSM communication protocols to establish path loss to the nearest base station or set of base stations, a co-located CDMA system can subsequently use this information in its admissions policy, especially in relation to power control. In other words, with narrowband-type systems operating cell re-use patterns other than unitary cell re-use, use can be made of control channel (broadcast) transmissions from such narrowband-type systems to optimise spread-spectrum power control in the set-up of a wideband communication (in view of CDMA path loss parameters being inferred from corresponding narrowband broadcasts from ostensibly an identical geographical allocation). If the GSM protocol is employed, the communications system uses a neighbour list to establish the geographically near base station or base stations. The communication system of one embodiment can thus determine the effect on a base station or base stations, geographially near to the mobile station, of allowing the CDMA communication to be initiated before access to the CDMA system is actually allowed.

In more detail, if a GSM connection (or a GSM call per se) is first initiated/monitored by a multi-mode subscriber unit also capable of W-CDMA operation (or the like), then the multi-mode subscriber unit (or at least a subscriber unit able to monitor and assess GSM traffic) is able to make use of the more regularly broadcast neighbour (BA) list in GSM to assess its interference environment (as contrasted with the multi-mode subscriber unit merely remaining in a CDMA idle mode). More particularly, the multi-mode subscriber unit continuously monitors, using the GSM protocol, the base transceiver stations transmitting within its vicinity in order to maintain the neighbour list. Since far-away base transceiver stations are only called upon to provide service to the subscriber unit during log-normal (deep) fades of near-in base sites (which is statistically an infrequent event), the subscriber tracks path loss (and so establishes a profile of path loss duration and degree of attenuation) of its likely near-in neighbour base sites during GSM broadcasts. Therefore, prior to CDMA operation, a subscriber unit is appraised of the identity of geographically near-in base sites and, more importantly, whether unusual propagation conditions are likely to exist when a CDMA call is initiated.

Subsequently, once it is required to initiate a CDMA call (by the subscriber unit sending, for example, a request over the Random Access Channel (RACH)), the subscriber unit can append information to up-link messages exchanged during the call set-up procedure to indicate the geographically nearest BSSs based on the up-to-date neighbour list and acquired path loss profiles. Assuming that the subscriber unit finds itself in the above described unusual propagation conditions (namely near-in deep fades), call set-up is made to and through a far-away but low propagation loss BTS (e.g. BSS 70 of cell 88 of FIG. 2). An associated BSC, or some other control element in the system (such as the OMC 46), may then decide, based upon cell noise rise measurements from surrounding near-in cells (or the system as a whole) whether the spread spectrum system will be able to cope with the possibly massive increase in interference if the subscriber unit initially communicates with the far-away BSS but then moves out of the deep fade propagation condition. Admission to the CDMA system may then be controlled, for example by accepting the call as requested, by denying the call or by limiting the data rates or the transmit power of the subscriber unit to the far-away BSS.

In essence, before extending reach (and hence increasing power) to a far-away transceiver, the BSC (or other control element) or the subscriber unit either: i) looks to predict an interference environment by producing a model of anticipated propagation conditions based on neighbour (or system-wide, in the case of an infrastructure-based decision) measurements and a proposed transmit power; or ii) merely bases a decision to increase power on a perceived overall interference environment from at least one of multiple air-interfaces, i.e. if all air-interfaces incident to a transceiver are subject to deep fade, then a power increase is generally acceptable (subject to deep fade event duration). In relation to a predictive system, significantly greater processing power is required and so the use of a neural network may be desirable. Propagation models suitable for use within the present invention will be readily appreciated by the skilled addressee, with such propagation models already used in network planning in conventional cellular re-use schemes.

A further embodiment of the present invention goes further and causes initiation of a narrowband call before considering conversion of that call into a CDMA-type environment.

Looking now to a CDMA-based environment and the optimisation of such a system from idle mode operation. A preferred embodiment of the present invention operates such that a subscriber unit looks to its entire frequency carrier environment to infer propagation conditions thereto from near-in and far-away base stations (in its preferred mode of operation, e.g. W-CDMA). The frequency carrier environment includes at least two different air-interfaces, e.g. nine hundred mega-Hertz (900MHz) GSM, 1800MHz GSM and 2000MHz CDMA. Of course, a more restricted view could be taken of, in the limit, two carrier frequencies from different systems operating at different frequencies (and generally employing different air-interfaces). More specifically, with the subscriber unit measuring RSSI (whether absolute signal strength or BER/FER or an equivalent parameter) and further configured to time a duration of a signal attenuation event (such as a deep fade), the subscriber unit can independently configure its transmit power regime to anticipate imminent near-far problems or a prevailing attenuation condition. For example, short duration deep fade conditions (measured in a first air-interface environment) to several near-in BSSs generally indicate a transitory deep fade and justification for a limited power regime for a call supported in a spread spectrum system used in a second air-interface. Conversely, long duration deep fades to near-in BSSs infer path loss stability which would allow high power connection to a remote, far-away BSS. Furthermore, with looking to multiple air interfaces, substantially unaffected by path loss from one air interface emanating from co-located BSSs generally implies a transitory path loss environment. Consequently, the subscriber unit may persist with an existing, limited power setting.

Of course, the subscriber unit can report measurements up-link to the BSS in order that the system, as a whole, can benefit from a more informed decision-making process, with subsequent down-link control therefore reflecting adjacent cell conditions (but this is acquired at the expense of incurring delay in power control implementation changes). Clearly, with the subscriber unit aware of at least some base site identities through the BA list (if not exact location based on triangulation or GPS-technology), this location information can be utilised to make a more informed decision on power control and BSS service point. With better location information, some of the processing complexity can be removed from the subscriber terminal such that control logic in BSCs and/or OMCs is tasked with inferring an interference environment for particular subscribers and, preferably, for the system as a whole. Clearly, if the interference environment is administered from BSC platforms, then interconnection and communication therebetween is at least desirable, if not preferred, with control channels (either dedicated or logical) structured to support specific power control instructions, as will readily be appreciated.

In any event, refinement of power control initially undertaken by the subscriber unit can occur through up-link and down-link interaction between the subscriber unit and control infrastructure.

By looking to at least a selection of carrier frequencies within different air-interfaces, a subscriber unit can assimilate/assess an average path loss from each contactable cell site by removing (i.e. correcting for) the effects of frequency-dependent fading components in down-link transmissions.

Looking to idle mode operation of the subscriber unit in a preferred air-interface environment, such as UMTS W-CDMA, call establishment can be based directly on path loss measurements from co-located BSSs supporting a variety of different air-interface protocols at different frequencies. By inferring likely propagation conditions in the W-CDMA mode from a GSM system or the like, the subscriber unit can make decisions on its call set-up procedure, e.g. its up-link transmit power and can generally parameterise W-CDMA operation, including data transmission rates and QoS in general. Indeed, the inference of anticipated path loss from a BSS takes out uncertainty in pilot power down-link transmissions in CDMA-type systems and hence provides an indication of displacement of a subscriber unit from a signature-identified (i.e. control channel identified) BSS. Furthermore, the inferred path loss with a CDMA environment may suggest that a better QoS could be obtained from call establishment with a different air-interface, such as GSM.

In an in-call scenario, continual measurement of the surrounding interference environment using the scanning receiver to look to a selected multiplicity or all carriers of a plurality of air-interfaces can again be used to infer likely propagation environments in a particular air-interface. Therefore, the inferences can be used to adjust operating parameters (particularly power) to minimise system interference and/or to adjust QoS. For example, if a subscriber unit is already transmitting at its maximum permitted power level, the inferred path loss for the system may warrant the immediate backing-off of the data rate and power in a CDMA call in view of an expected imminent change in deep-fade conditions to near-in BSSs. Indeed, the decision could be that the call should be dropped. Additionally, with some systems operating a power transmission limit below a maximum transmit power capability of a subscriber unit, inference of path loss conditions according to the preferred embodiment of the present invention could justify an increase in power above the threshold in the event of stable deep fade when communicating to near-in BSSs.

In summary, the present invention can modify the operating parameters of the subscriber unit and/or any requests for channel resources based on an inferred effect on a near-in base station resulting from allowance of a spread spectrum (wideband) CDMA-type communication to be initiated or up-link power thereof altered.

It is contemplated that the controller 114 of FIG. 3 could be realised by a neural network to provide an enhanced predictive system based on inferred signal propagation conditions measured by a subscriber unit across multiple air-interfaces.

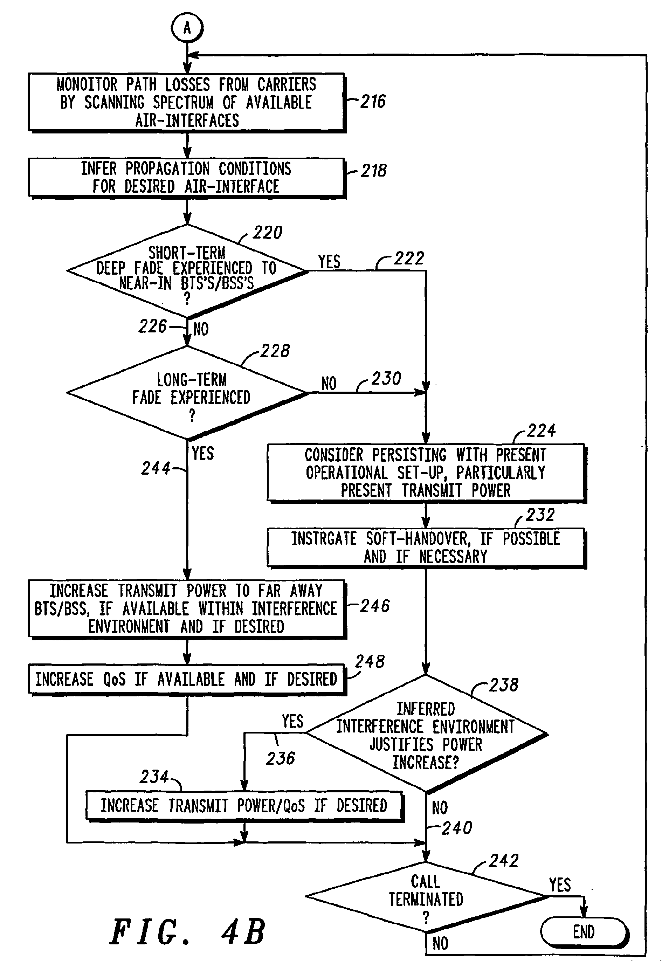

FIG. 4 is a flow diagram 200 depicting connection control and power management within an air-interface environment according to a preferred operating methodology. Following power-up of a subscriber unit 202, the subscriber unit receives 204 identities of near-in BTSs/BSSs over a broadcast control channel or the like. Of course, the subscriber unit may receive multiple different BA lists for different air-interface environments. The scanning receiver 106 of the subscriber unit then sets about monitoring 206, with time, path loss from visible (in an RF sense) BTSs/BSSs. By monitoring path loss with time and having regard to BTS/BSS location, the system (either the subscriber unit or control infrastructure) can infer 208 propagation conditions in at least one preferred communication system generally operating a different air-interface within a different frequency band. Step 210 indicates that the measured path loss (calculated on an RSSI, BER, FER or like basis) could be communicated up-link to the BSC/OMC to allow a system operator to make a more informed power control/parameterisation decision.

Armed with the inferred propagation environment for a desired system, modification 212 of operational parameters is undertaken, e.g. power level control, data rate, system selection, etc. A call can then be established 214, which call is preferably within the preferred wideband communication system for which inference of the interference environment was based on a narrowband system having a re-use pattern greater then unity.

The process continues in-call with path loss from visible cell sites (of multiple systems) being monitored 216 through the scanning receiver scanning the frequency spectrum for available broadcast channels on which signal quality can be assessed. Again, an inference is made 218 as to how such broadcast channel measurements relate to an interference environment of a desired communication system/air-interface.

Now in-call, a decision 220 is made within the system (whether at the subscriber unit or within the infrastructure) as to whether the path losses are indicative of a short-term deep fade experienced to near-in BTSs/BSSs. In the affirmative 222, then flow proceeds to step 224 where the system considers and preferably retains its present operational set-up (especially in relation to transmit power). A negative path 226 from decision block 220 results in an assessment 228 being made as to whether the subscriber unit is experiencing a long term fade. A negative path 230 (meaning that the subscriber unit is not experiencing any adverse propagation conditions) results in consolidation of the process to block 224. Subsequent operating steps from block 224 considers instigation 232 of soft-handover (if necessary and if possible), Of course, increased operational performance 234 can only be justified 236 if the interference environment can support (at decision block 238) the increase in noise. If the interference environment is already at a point of saturation, then no increase 240 in operational performance can be sustained and the process essentially looks to call termination 242 and hence either a return to an idle mode (i.e. return to the block 204) or a return to in-call monitoring an interference inference (block 216).

In the event that a long-term fade is being experienced (affirmative path 244 from decision block 228), then the system can operate to increase transmit power/alter parameterisation 246 (if possible in view of power constraints and if desired). This increase in power may result in an increase in QoS 248. Flow is once again consolidated, but this time to the point where the assessment 242 is made as to whether the call is on-going or not.

Steps 220 to 240 and 246 and 248 of FIG. 4 generally equate to the process undertaken within block 212, but is considered in an in-call scenario where dynamic control of operational parameters is desirable.

A long term fade may be defined in terms of tens of seconds, say twenty seconds or more, although the point/threshold can be selected by the operator since the decision will affect system performance; it results in a trade-off between increased capacity and increased levels of interference.

In general summary, the present invention looks to establish an overall picture of interference in relation to down-link transmissions to a subscriber unit across multiple air-interfaces supported by co-located base stations offering different services within different spectral bands. Based on path loss measurements from one or more different systems, an interference environment for a wideband universal re-use scheme is assessed such that power control can be employed in a sensible and efficient manner within the wideband universal re-use scheme. Such power control (having regard to the overall propagation environment of all systems to a subscriber unit) can therefore take into account deep fades of varying duration and can therefore address the potential near-far problems associated with high power transmissions to remote base sites.

Although the present invention is particularly applicable to up-link transmissions, the present invention could, if desired, by employed in down-link power control. However, it will be understood that down-link power control is nowhere near as critical as up-link power control because of the fixed and planned nature of base station deployment and operation.

It will, of course, be appreciated that the above description has been given by way of example only and that modifications in detail may be made within the scope of the present invention. For example, whilst the preferred embodiment discusses the application of the present invention to a W-CDMA environment within UMTS, the skilled addressee will appreciate that the underlying inventive concept can be applied to a time division duplex (TDD)'environment within UMTS, i.e. a hybrid DS-CDMA and TDMA method in which up-link and down-link carriers utilise a common carrier frequency. Moreover, the present invention finds application in any wideband system in which individual channels (potentially on a common carrier resource) contribute to an interference environment. Indeed, the present invention may be implemented in a conventional IS-95-type CDMA system provided that a subscriber unit's receiver is able to monitor an overall radio frequency interference environment. In fact, the present invention is able to augment operation of systems employing unitary frequency re-use (which suffer from the near-far problem) provided that a subscriber unit contains a scanning receiver that is able to look to both a wide area and local radio frequency environment to infer interference conditions within a preferred air-interface.

The present invention can be employed within layered cellular systems supporting different air-interfaces between the layers, e.g. a GSM umbrella cell overlaying TDD micro-cells overlaying CDMA pico-cells.

The control software for the present invention can, of course, be provided in a number of forms, including as a program stored on a CD-ROM (or the like) or as over-the-air download. By way of illustration only, the software required to operate either a subscriber unit or infrastructure controller is shown as a loadable computer program product 300 (within FIG. 1).

## Claims

1. A method (200) of controlling transmit power from a transceiver (70, 100) of a cellular communication system realised by a plurality of cells (80, 88, 90) at least two of the cells having base station equipment (22-32), and having co-located base station equipment supporting a plurality of different air-interfaces monitorable by the transceiver unit, the method comprising:
assessing an interference environment arising from use of at least a first air-interface in at least two of the plurality of cells;
inferring (208) propagation conditions that are likely to be experienced within a second air-interface based on the assessed interference environment; and
controlling (212) power transmission settings within the second air-interface based on said inferred propagation conditions.

2. The method according to claim 1, wherein the second air-interface is a spread spectrum service and said first air-interface includes a narrowband air-interface.

3. The method according to claim 1 or 2, further comprising:
determining (216) path losses associated with at least one type of air-interface supported by different base stations in at least two of the plurality of cells.

4. The method according to claim 3, further comprising:
based on the path losses, selectively operating the transceiver unit in an air-interface mode non-common with said first air-interface used to assess the interference environment.

5. The method according to claim 2, wherein the spread spectrum service has a universal frequency re-use pattern across a multiplicity of cells.

6. The method according to any preceding claim, further comprising:
timing a duration of path loss events;
determining (220, 228) whether the duration of a path loss event is indicative of a fading condition; and
operating (246, 234) the transceiver unit in an elevated power transmission mode in response to a determination that the transceiver unit is subject to a fading condition.

7. The method according to claim 6, wherein the elevated power transmission mode is a spread spectrum mode.

8. The method according to any preceding claim, further comprising:
commencing communication in a narrowband mode;
assessing the interference environment in the narrowband mode; and
switching communication to a wideband mode when the interference environment of the narrowband mode is deemed sufficient to support operation of the transceiver unit in the wideband mode.

9. The method according to any preceding claim, wherein the interference environment is assessed in relation to nearby cell broadcast transmissions.

10. The method according to any preceding claim, wherein the transceiver unit is a subscriber unit and wherein controlling power control settings is based on at least one of:
a predictive model projecting an effect of an increase in power transmission settings from the transceiver unit in relation to an existing interference environment; and
an interference environment presently experienced by the transceiver unit.

11. The method according to any preceding claim, wherein controlling power control settings is administered on a system-wide basis from within infrastructure of the cellular communication system.

12. The method according to any of claims 1 to 11, wherein controlling power control settings is administered by the transceiver unit.

13. The method according to any of claims 1 to 12, wherein the transceiver unit is a subscriber unit.

14. A cellular communication system having a plurality of cells at least two of the cells containing base site equipment, at least two of the base site equipment (22-32) supporting a plurality of different air-interfaces monitorable by subscriber units operational within the cellular communication system and wherein at least two of the subscriber units are serviceable by at least one of the air-interfaces, the cellular communication system comprising:
means for assessing an interference environment arising from use of a first air-interface in at least one of the plurality of cells;
means (114, 48-52) for inferring propagation conditions that are likely to be experienced within a second air-interface based on the assessed interference environment; and
means for controlling power transmission or power control settings within the second air-interface based on said inferred propagation conditions.

15. The cellular communication system according to claim 14, further comprising:
means for determining path losses associated with at least one type of air-interface supported by different base stations in at least two of the plurality of cells.

16. The cellular communication system according to claim 15, further comprising:
means (114, 46-52) for selectively operating subscribers unit in an air-interface mode non-common with said first air-interface used to assess the interference environment, the means for selectively operating responsive to said path losses.

17. The cellular communication system according to claim 14, 15, or 16, further comprising:
a timer (118) for timing a duration of path loss events;
means (114) for determining whether the duration of a path loss event is indicative of a fading condition; and
means (114) for selectively operating subscriber units in an elevated power transmission mode in response to a determination that individual subscribers unit are subject to a fading condition.

18. The cellular communication system according to claim 17, wherein the elevated power transmission mode is a spread spectrum mode supported on a wideband air-interface having a universal frequency re-use across a multiplicity of cells.

19. The cellular communication system according to any of claims 14 to 18, further comprising:
means for commencing communication in a narrowband mode;
means for assessing the interference environment in the narrowband mode; and
means for switching communication to a wideband mode when the interference environment of the narrowband mode is deemed sufficient to support operation of the transceiver unit in the wideband mode.

20. The cellular communication system according to any of claims 14 to 19, wherein the means for controlling power control settings is administered on a system-wide basis from within infrastructure of the cellular communication system.

21. The cellular communication system according to any of claims 14 to 19, wherein the means for controlling power control settings is administered by the transceiver unit.

22. A subscriber unit responsive to channel resources supporting a plurality of carrier frequencies assigned to support at least two different air-interfaces, the subscriber unit comprising:
a scanning receiver (106) selectively operationally responsive to the plurality of carrier frequencies;
means for assessing an interference environment arising from use of a first air-interface; and
means for selecting and controlling power transmission or power control settings within a second air-interface based on inference of propagation conditions that are likely to be experienced within the second air-interface, the inference of propagation conditions based on the assessed interference environment.

23. The subscriber unit according to claim 22, wherein the second air-interface is a spread spectrum service and said at least one air-interface includes a narrowband air-interface.

24. The subscriber unit according to claim 23, further comprising:
means for determining path losses associated with at least one type of air-interface supported by different base stations in a plurality of cells.

25. The subscriber unit according to claim 24, further comprising:
means, responsive to path loss determinations, for selectively operating the subscriber unit in an air-interface mode non-common with said at least one air-interface used to assess the interference environment.

26. The subscriber unit according to any of claims 22 to 25, further comprising:
a timer (118) for timing a duration of path loss events;
means for determining whether the duration of a path loss event is indicative of a fading condition; and
means for operating the subscriber unit in an elevated power transmission mode in response to a determination that the subscriber unit is subject to a fading condition.

27. The subscriber unit according to claim 26, wherein the elevated power transmission mode is a spread spectrum mode.

28. The subscriber unit according to any of claims 22 to 27, further comprising:
means for commencing communication in a narrowband mode;
means for assessing an interference environment in the narrowband mode; and
means for switching communication to a wideband mode when the interference environment of the narrowband mode is deemed sufficient to support operation of the transceiver unit in the wideband mode.

29. The subscriber unit according to any of claims 22 to 28, wherein the interference environment is assessed in relation to nearby cell broadcast transmissions.

30. The subscriber unit according to any of claims 22 to 29, further comprising:
a predictive model projecting an effect of an increase in power transmission settings from the subscriber unit in relation to an existing interference environment;
and wherein the means for controlling power transmission or power control settings is operationally responsive to at least the predictive model.

31. The subscriber unit according to any of claims 22 to 29, further comprising:
means for communicating the assessment of the interference environment to servicing base station equipment; and
means for receiving control instructions from servicing base station equipment to regulate operation of the means for selecting and controlling power transmission or power control settings.

32. A method of operating a subscriber unit responsive to channel resources supporting a plurality of carrier frequencies assigned to support at least two different air-interfaces, the method comprising:
scanning the carrier plurality of carrier frequencies; assessing an interference environment arising from use of a first air-interface; and
controlling power transmission settings within a second air-interface based on inference of propagation conditions that are likely to be experienced within the second air-interface, the inference of propagation conditions based on the assessed interference environment.

33. The method of operating a subscriber unit according to claim 32, further comprising:
determining path losses associated with at least one type of air-interface supported by different base stations in a plurality of cells.

34. The method of operating a subscriber unit according to claim 33, further comprising:
responsive to path loss determinations, selectively operating the subscriber unit in an air-interface mode non-common with said first air-interface used to assess the interference environment.

35. The method of operating a subscriber unit according to claim 31, 33 or 34, further comprising:
timing a duration of path loss events;
determining whether the duration of a path loss event is indicative of a fading condition; and
operating the subscriber unit in an elevated power transmission mode in response to a determination that the subscriber unit is subject to a fading condition.

36. The method of operating a subscriber unit according to claim 35, wherein the elevated power transmission mode is a spread spectrum mode.

37. The method of operating a subscriber unit according to any of claims 32 to 36, further comprising:
commencing communication in a narrowband mode;
assessing an interference environment in the narrowband mode; and
switching communication to a wideband mode when the interference environment of the narrowband mode is deemed sufficient to support operation of the transceiver unit in the wideband mode.

38. The method of operating a subscriber unit according to any of claims 32 to 37, wherein the interference environment is assessed in relation to nearby cell broadcast transmissions.

39. The method of operating a subscriber unit according to any of claims 32 to 38, further comprising:
generating a predictive model projecting an effect of an increase in power transmission settings from the subscriber unit in relation to an existing interference environment;
and wherein the means for controlling power transmission or power control settings is operationally responsive to at least the predictive model.

40. The method of operating a subscriber unit according to any of claims 32 to 39, further comprising:
communicating the assessment of the interference environment to servicing base station equipment; and
receiving control instructions from servicing base station equipment to regulate operation of the means for selecting and controlling power transmission or power control settings.

41. A computer program element comprising computer program code means to make a controller of a cellular subscriber device execute procedure to perform a method according to any of the claims 32 to 40.

42. The computer program element according to claim 41, embodied on a computer readable medium.

## Patentansprüche

1. Verfahren (200) zum Steuern/Regeln der Sendeleistung eines Transceivers (70, 100) eines durch eine Vielzahl von Zellen (80, 88, 90) verwirklichten zellularen Kommunikationssystems wobei mindestens zwei der Zellen eine Basisstationseinrichtung (22-32) aufweisen, und wobei das Kommunikationssystem eine gemeinsam angeordnete Basisstationseinrichtung aufweist, die eine Vielzahl verschiedener von der Transceivereinheit überwachbarer Luftschnittstellen unterstützt, wobei das Verfahren folgendes aufweist:
Beurteilen einer Interferenzumgebung, die durch die Verwendung mindestens einer ersten Luftschnittstelle in mindestens zwei Zellen aus der Vielzahl von Zellen entsteht.
Rückschließen (208) auf Ausbreitungsbedingungen, die innerhalb einer zweiten Luftschnittstelle wahrscheinlich anzutreffen sind, auf der Grundlage der beurteilten Interferenzumgebung, und
Steuern/Regeln (212) von Leistungssendungseinstellungen innerhalb der zweiten Luftschnittstelle auf der Grundlage der genannten durch Ruckschließen ermittelten Ausbreitungsbedingungen.

2. Verfahren gemäß Anspruch 1, wobei die zweite Luftschnittstelle ein Frequenzspreizungsdienst ist und die genannte erste Luftschnittstelle eine Schmalband-Luftschnittstelle aufweist.

3. Verfahren gemäß Anspruch 1 oder 2, weiter folgendes umfassend:
Ermitteln (216) von Pfadverlusten, die mit mindestens einem Luftschnittstellentyp zusammenhängen, welcher von unterschiedlichen Basisstationen in mindestens zwei Zellen aus der Vielzahl von Zellen unterstützt wird.

4. Verfahren gemäß Anspruch 3, weiter umfassend:
auf der Grundlage der Pfadverluste selektives Betreiben der Transceivereinheit in einem Luftschnittstellenmodus, den die zum Beurteilen der lnterferenzumgebung verwendete genannte erste Luftschnittstelle nicht verwendet.

5. Verfahren gemäß Anspruch 2, wobei der Frequenzspreizungsdienst ein universales Frequenzwiederverwendungsmuster über einer Vielzahl von Zellen aufweist.

6. Verfahren gemäß einem der vorhergehenden Ansprüche, weiter umfassend:
zeitliches Bestimmen einer Dauer von Pfadverlustereignissen;
Ermitteln (220, 228), ob die Dauer eines Pfadverlustereignisses eine Schwundbedingung anzeigt, und
Betreiben (246, 234) der Transceivereinheit in einem Sendungsmodus mit erhöhter Leistung in Antwort auf eine Ermittlung, dass die Transceivereinheit einer Schwundbedingung unterliegt.

7. Verfahren gemäß Anspruch 6, wobei der Sendungsmodus mit erhöhter Leistung ein Frequenzspreizungsmodus ist.

8. Verfahren gemäß einem der vorhergehenden Ansprüche, weiter umfassend:
Beginnen einer Kommunikation in einem Schmalbandmodus;
Beurteilen der Interferenzumgebung in dem Schmalbandmodus; und
Schalten der Kommunikation in einen Breitbandmodus, wenn die Interferenzumgebung des Schmalbandmodus als ausreichend erachtet wird, um einen Betrieb der Transceivereinheit in dem Breitbandmodus zu erlauben.

9. Verfahren gemäß einem der vorhergehenden Ansprüche, wobei die Interferenzumgebung in Bezug auf Broadcastsendungen nahegelegener Zellen beurteilt wird.

10. Verfahren gemäß einem der vorhergehenden Ansprüche, wobei die Transceivereinheit eine Teilnehmereinheit ist, und wobei Leistungssteuerungseinstellungen auf der Grundlage von mindestens einem aus dem folgenden gesteuert/geregelt werden:
einem Vorhersagemodell, das eine Auswirkung einer Erhohung von Leistungssendungseinstellungen von der Transceivereinheit in Bezug auf eine bestehende Interferenzumgebung vorhersagt; und
einer interferenzumgebung, der die Transceivereinheit gegenwärtig ausgesetzt ist.

11. Verfahren gemäß einem der vorhergehenden Ansprüche, wobei das Steuern/Regeln der Leistungssteuerungseinstellungen auf einer systemweiten Grundlage von einer Infrastruktur des zellularen Kommunikationssystems verwaltet wird.

12. Verfahren gemäß einem der Ansprüche 1 bis 11, wobei das Steuern/Regeln der Leistungssteuerungseinstellungen von der Transceivereinheit verwaltet wird.

13. Verfahren gemäß einem der Ansprüche 1 bis 12, wobei die Transceivereinheit eine Teilnehmereinheit ist.

14. Zellulares Kommunikationssystem mit einer Vielzahl von Zellen, wobei mindestens zwei der Zellen eine Basisstationseinrichtung enthalten, wobei mindestens zwei der Basisstationseinrichtungen (22-32) eine Vielzahl verschiedener Luftschnittstellen unterstützen, welche von Teilnehmereinheiten überwachbar sind, die innerhalb des zellularen Kommunikationssystems betreibbar sind, und wobei mindestens zwei der Teilnehmereinheiten von mindestens einer der Luftschnittstellen bedienbar sind, wobei das zellulare Kommunikationssystem folgendes umfasst:
Mittel zum Beurteilen einer interferenzumgebung, die durch die Verwendung einer ersten Luftschnittstelle in mindestens einer Zelle aus der Vielzahl von Zellen entsteht,
Mittel (114, 48-52) zum Rückschließen auf Ausbreitungsbedingungen, die innerhalb einer zweiten Luftschnittstelle wahrscheinlich anzutreffen sind, auf der Grundlage der beurteilten Interferenzumgebung; und
Mittel zum Steuern/Regeln einer Leistungssendung oder Leistungssteuerungseinstellungen innerhalb der zweiten Luftschnittstelle auf der Grundlage der genannten durch Rückschließen ermittelten Ausbreitungsbedingungen.

15. Zellulares Kommunikationssystem gemäß Anspruch 14, weiter umfassend:
Mittel zum Ermitteln von Pfadverlusten, die mit mindestens einem Luftschnittstellentyp zusammenhängen, der von verschiedenen Basisstationen in mindestens zwei Zellen aus der Vielzahl von Zellen unterstützt wird.

16. Zellulares Kommunikationssystem gemäß Anspruch 15, weiter umfassend:
Mittel (114, 46-52) zum selektiven Betreiben von Teilnehmereinheiten in einem Luftschnittstellenmodus, den die zum Beurteilen der Interferenzumgebung verwendete genannte erste Luftschnittstelle nicht verwendet, wobei die Mittel zum selektiven Betreiben auf die genannten Pfadverluste ansprechen.

17. Zellulares Kommunikationssystem gemäß Anspruch 14, 15 oder 16, weiter umfassend:
einen Zeitbestimmer (118) zum zeitlichen Bestimmen einer Dauer von Pfadverlustereignissen;
Mittel (114) zum Ermitteln, ob die Dauer eines Pfadverlustereignisses eine Schwundbedingung anzeigt; und
Mittel (114) zum selektiven Betreiben von Teilnehmereinheiten in einem Sendungsmodus mit erhöhter Leistung in Antwort auf eine Ermittlung, dass einzelne Teilnehmereinheiten einer Schwundbedingung unterliegen.

18. Zellulares Kommunikationssystem gemäß Anspruch 17, wobei der Sendungsmodus mit erhöhter Leistung ein Frequenzspreizungsmodus ist, der auf einer Breitband-Luftschnittstelle unterstützt wird welche eine universale Frequenzwiederverwendung über einer Vielzahl von Zellen aufweist.

19. Zellulares Kommunikationssystem gemäß einem der Ansprüche 14 bis 18, weiter umfassend:
Mittel zum Beginnen einer Kommunikation in einem Schmalbandmodus;
Mittel zum Beurteilen der Interferenzumgebung in dem Schmalbandmodus; und
Mittel zum Schalten der Kommunikation in einen Breitbandmodus, wenn die Interterenzumgebung des Schmalbandmodus als ausreichend erachtet wird, um einen Betrieb der Transceivereinheit in dem Breitbandmodus zu erlauben.

20. Zellulares Kommunikationssystem gemäß einem der Ansprüche 14 bis 19, wobei die Mittel zum Steuern/Regeln der Leistungssteuerungseinstellungen auf einer systemweiten Grundlage von einer Infrastruktur des zellularen Kommunikationssystems verwaltet werden.

21. Zellulares Kommunikationssystem gemäß einem der Ansprüche 14 bis 19, wobei die Mittel zum Steuern/Regeln der Leistungssteuerungseinstellungen von der Transceivereinheit verwaltet werden.

22. Teilnehmereinheit, die auf Kanalressourcen anspricht, die eine Vielzahl von Tragerfrequenzen unterstützen, die zugewiesen sind, um mindestens zwei verschiedene Luftschnittstellen zu unterstützten, wobei die Teilnehmereinheit folgendes umfasst:
einen Scan-Empfänger (106), der selektiv betriebsmäßig auf die Vielzahl von Tragerfrequenzen anspricht;
Mittel zum Beurteilen einer Interferenzumgebung, die durch die Verwendung einer ersten Luftschnittstelle entsteht; und
Mittel zum Auswählen und Steuern/Regeln einer Leistungssendung oder Leistungssteuerungseinstellungen innerhalb einer zweiten Luftschnittstelle auf der Grundlage eines Rückschlusses auf Ausbreitungsbedingungen, die innerhalb der zweiten Luftsrhnittstelle wahrscheinlich anzutreffen sind, wobei der Rückschluss auf die Ausbreitungsbedingungen auf der beurteilten Interferenzumgebung beruht.

23. Teilnehmereinheit gemäß Anspruch 22, wobei die zweite Luftschnittstelle ein Frequenzspreizungsdienst ist und die genannte mindestens eine Luftschnittstelle eine Schmalband-Luftschnittstelle aufweist.

24. Teilnehmereinheit gemäß Anspruch 23, weiter umfassend:
Mittel zum Ermitteln von Pfadverlusten, die mit mindestens einem Luftschnittstellentyp zusammenhängen, der von verschiedenen Basisstationen in einer Vielzahl von Zellen unterstützt wird.

25. Teilnehmereiriheit gemäß Anspruch 24, weiter umfassend:
Mittel, die auf Pfadverlustermittlungen ansprechen, zum selektiven Betreiben der Teilnehmereinheit in einem Luftschnittstellenmodus, den die zum Beurteilen der Interferenzumgebung verwendete genannte mindestens eine Luftschnittstelle nicht verwendet.

26. Teilnehmereinheit gemäß einem der Ansprüche 22 bis 25, weiter umfassend:
einen Zeitbestimmer (118) zum zeitlichen Bestimmen einer Dauer von Pfadverlustereignissen,
Mittel zum Ermitteln, ob die Dauer eines Pfadverlustereignisses eine Schwundbedingung anzeigt; und
Mittel zum Betreiben der Teilnehmereinheit in einem Sendungsmodus mit erhöhter Leistung in Antwort auf eine Ermittlung, dass die Teilnehmereinheit einer Schwundbedingung unterliegt.

27. Teilnehmereinheit gemäß Anspruch 26, wobei der Sendungsmodus mit erhöhter Leistung ein Frequenzspreizungsmodus ist.

28. Teilnehmereinheit gemäß einem der Ansprüche 22 bis 27, weiter umfassend:
Mittel zum Beginnen einer Kommunikation in einem Schmalbandmodus;
Mittel zum Beurteilen einer Interterenzumgebung in dem Schmalbandmodus; und
Mittel zum Schalten der Kommunikation in einen Breitbandmodus, wenn die Interferenzumgebung des Schmalbandmodus als ausreichend erachtet wird, um einen Betreib der Transceivereinheit in dem Breitbandmodus zu erlauben.

29. Teilrtehmereinheit gemäß einem der Ansprüche 22 bis 28, wobei die Interferenzumgebung in Bezug auf Broadcastsendungen nahegelegener Zellen beurteilt wird.

30. Teilnehmereinheit gemäß einem der Ansprüche 22 bis 29, weiter umfassend:
ein Vorhersagemodell, das eine Auswirkung einer Erhöhung von Leistungssendungseinstellungen von der Teilnehmereinheit in Bezug auf eine bestehende Interterenzumgebung vorhersagt;
und wobei die Mittel zum Steuern/Regeln der Leistungssendung oder Leistungssteuerungseinstellungen betriebsmäßig auf mindestens das Vorhersagemodell ansprechen.

31. Teilnehmereinheit gemäß einem der Ansprüche 22 bis 29, weiter umfassend:
Mittel zum Übermitteln der Beurteilung der interferenzumgebung an eine Dienst-Basisstationseinrichtung; und
Mittel zum Empfangen von Steuer/Regelanweisungen von der Dienst-Basisstationseinrichtung, um den Betrieb der Mittel zum Auswählen und Steuern/Regeln der Leistungssendung oder Leistungssteuerungseinstellungen zu steuern/regeln.

32. Verfahren zum Betreiben einer Teilnehmereinheit, die auf Kanalressourcen anspricht, welche eine Vielzahl von Trägerfrequenzen unterstützen, die zugewiesen sind, um mindestens zwei verschiedene Luftschnittstellen zu unterstützen, wobei das Verfahren folgendes umfasst:
Scannen der Träger-Vielzahl von Trägerfrequenzen, Beurteilen einer Interferenzumgebung, die durch die Verwendung einer ersten Luftschnittstelle entsteht; und
Steuern/Regeln von Leistungssendungseinstellungen innerhalb einer zweiten Luftschnittstelle auf der Grundlage eines Rückschlusses auf Ausbreitungsbedingungen, die innerhalb der zweiten Luftschnittstelle wahrscheinlich anzutreffen sind wobei der Rückschluss auf die Ausbreitungsbedingungen auf der beurteilten Interferenzumgebung beruht.

33. Verfahren zum Betreiben einer Teilnehmereinheit gemäß Anspruch 32, weiter umfassend
Ermitteln von Pfadverlusten, die mit mindestens einem Luftschnittstellentyp zusammenhängen, der von verschiedenen Basisstationen in einer Vielzahl von Zellen unterstützt wird.

34. Verfahren zum Betreiben einer Teilnehmereinheit gemäß Anspruch 33, weiter umfassend
in Antwort auf Pfadverlustermittlungen, selektives Betreiben der Teilnehmereinheit in einem Luftschnittstellenmodus, den die zum Beurteilen der interferenzumgebung verwendete genannte erste Luftschnittstelle nicht verwendet.

35. Verfahren zum Betreiben einer Teilnehmereinheit gemäß Anspruch 31, 33 oder 34, weiter umfassend:
zeitliches Bestimmen einer Dauer von Pfadverlustereignissen:
Ermitteln, ob die Dauer eines Pfadverlustereignisses eine Interferenzbedingung anzeigt; und
Betreiben der Teilnehmereinheit in einem Sendungsmodus mit erhöhter Leistung in Antwort auf eine Ermittlung, dass die Teilnehmereinheit einer Schwundbedingung unterliegt.

36. Verfahren zum Betreiben einer Teilnehmereinheit gemäß Anspruch 35, wobei der Sendungsmodus mit erhöhter Leistung ein Frequenzspreizungsmodus ist

37. Verfahren zum Betreiben einer Teilnehmereinheit gemäß einem der Ansprüche 32 bis 36, weiter umfassend:
Beginnen einer Kommunikation in einem Schmalbandmodus;
Beurteilen einer Interferenzumgebung in dem Schmalbandmodus; und
Schalten der Kommunikation in einen Breitbandmodus, wenn die Interferenzumgebung des Schmalbandmodus als ausreichend erachtet wird, um einen Betrieb der Transceivereinheit in dem Breitbandmodus zu erlauben.

38. Verfahren zum Betreiben einer Teilnehmereinheit gemäß einem der Ansprüche 32 bis 37, wobei die Interferenzumgebung in Bezug auf Broadcastsendungen nahegelegener Zellen beurteilt wird.

39. Verfahren zum Betreiben einer Teilnehmereinheit gemäß einem der Ansprüche 32 bis 38, weiter umfassend:
Erzeugen eines Vorhersagemodells, das eine Auswirkung einer Erhöhung von Leistungssendungseinstellungen von der Teilnehmereinheit in Bezug auf eine bestehende Interferenzumgebung vorhersagt;
und wobei die Mittel zum Steuern/Regeln der Leistungssendung oder Leistungssteuerungseinstellungen betriebsmäßig mindestens auf das Vorhersagemodell ansprechen.

40. Verfahren zum Betreiben einer Teilnehmereinheit gemäß einem der Ansprüche 32 bis 39, weiter umfassend:
Übermitteln der Beurteilung der Interferenzumgebung an eine Dienst-Basisstationseinrichtung; und
Empfangen von Steuer/Regelanweisungen von der Dienst-Basisstationseinrichtung, um den Betrieb der Mittel zum Auswählen und Steuern/Regeln der Leistungssendung oder Leistungssteuerungseinstellungen zu steuern/regeln.

41. Computerprogrammelement, das Computerprogrammcodemittel umfasst, um zu bewirken, dass eine Steuer/Regeleinrichtung einer zellularen Teilnehmervorrichtung Prozeduren ausführt, um ein Verfahren gemäß einem der Ansprüche 32 bis 40 durchzuführen.

42. Computerprogrammelement gemäß Anspruch 41, das auf einem computerlesbaren Medium verwirklicht ist.

## Revendications

1. Procédé (200) pour commander la puissance d'émission d'un émetteur-récepteur (70, 100) d'un système de communication cellulaire réalisé par une pluralité de cellules (80, 88, 90), au moins deux des cellules possédant un équipement de station de base (22 à 32) et possédant un équipement de station de base co-localisé prenant en charge une pluralité d'interfaces hertziennes différentes pouvant être surveillées par l'unité d'émetteur-récepteur, le procédé comprenant :
l'évaluation d'un environnement d'interférence dû à l'utilisation d'au moins une première interface hertzienne dans au moins deux cellules de la pluralité de cellules;
la détermination (208) de conditions de propagation susceptibles d'être ressenties dans une deuxième interface hertzienne, en se basant sur l'environnement d'interférence évalué ; et
la commande (212) des paramétrages d'émission d'énergie dans la deuxième interface hertzienne, en se basant sur lesdites conditions de propagation déterminées.

2. Procédé selon la revendication 1, dans lequel la deuxième interface hertzienne est un service à spectre étalé et ladite première interface hertzienne comporte une interface hertzienne à bande étroite.

3. Procédé selon la revendication 1 ou 2, comprenant en outre:
la détermination (216) de pertes de trajet associées au moins à un type d'interface hertzienne prise en charge par différentes stations de base dans au moins deux cellules de la pluralité de cellules.

4. Procédé selon la revendication 3, comprenant en outre:
en se basant sur les pertes de trajet, l'exploitation sélective de l'unité d'émetteur-récepteur dans un mode d'interface hertzienne qui n'est pas commun avec ladite première interface hertzienne utilisée pour évaluer l'environnement d'interférence.

5. Procédé selon la revendication 2, dans lequel le service à spectre étalé comporte un motif de réutilisation de fréquence universelle sur une multiplicité de cellules.

6. Procédé selon l'une quelconque des revendications précédentes, comprenant en outre :
le minutage de la durée des événements de perte de trajet;
la détermination (220, 228) du fait que la durée d'un événement de perte de trajet indique un état d'évanouissement ; et
l'exploitation (246, 234) de l'unité d'émetteur-récepteur dans un mode d'émission à forte puissance en réponse à la détermination du fait que l'unité d'émetteur-récepteur fait l'objet d'une condition d'évanouissement.

7. Procédé selon la revendication 6, dans lequel le mode d'émission à forte puissance est un mode à spectre étalé.

8. Procédé selon l'une quelconque des revendications précédentes, comprenant en outre :
le démarrage de la communication dans un mode à bande étroite ;
l'évaluation de l'environnement d'interférence dans le mode à bande étroite ; et
le passage de la communication dans un mode à large bande lorsque l'environnement d'interférence du mode à bande étroite est estimé suffisant pour prendre en charge l'exploitation de l'unité d'émetteur-récepteur dans le mode à large bande.

9. Procédé selon l'une quelconque des revendications précédentes, dans lequel l'environnement d'interférence est évalué en relation avec des émissions de diffusion de cellules avoisinantes.

10. Procédé selon l'une quelconque des revendications précédentes, dans lequel l'unité d'émetteur-récepteur est une unité d'abonné et dans lequel la commande des paramétrages de commande de puissance est basée au moins sur un parmi :
un modèle prédictif projetant l'effet d'une augmentation des paramétrages d'émission d'énergie de l'unité d'émetteur-récepteur en relation avec un environnement d'interférence existant ; et
un environnement d'interférence dont l'unité d'émetteur-récepteur fait actuellement l'objet.

11. Procédé selon l'une quelconque des revendications précédentes, dans lequel la commande des paramétrages de commande de puissance est gérée au niveau de l'ensemble du système depuis l'intérieur de l'infrastructure du système de communication cellulaire.

12. Procédé selon l'une quelconque des revendications 1 à 11, dans lequel la commande des paramétrages de commande de puissance est gérée par l'unité d'émetteur-récepteur.

13. Procédé selon l'une quelconque des revendications 1 à 12, dans lequel l'unité d'émetteur-récepteur est une unité d'abonné.

14. Système de communication cellulaire comportant une pluralité de cellules, au moins deux des cellules contenant un équipement de site de base, au moins deux des équipements de site de base (22 à 32) prenant en charge une pluralité d'interfaces hertziennes différentes pouvant être surveillées par des unités d'abonné fonctionnant au sein du système de communication cellulaire et dans lequel au moins deux des unités d'abonné sont utilisables par au moins une des interfaces hertziennes, le système de communication cellulaire comprenant :
un moyen pour évaluer un environnement d'interférence dû à l'utilisation d'une première interface hertzienne dans au moins une cellule de la pluralité de cellules ;
un moyen (114, 48 à 52) pour déterminer des conditions de propagation susceptibles d'être ressenties dans une deuxième interface hertzienne, en se basant sur l'environnement d'interférence évalué ; et
un moyen pour commander les paramétrages d'émission d'énergie ou de commande de puissance dans la deuxième interface hertzienne, en se basant sur lesdites conditions de propagation déterminées.

15. Système de communication cellulaire selon la revendication 14, comprenant en outre :
un moyen pour déterminer les pertes de trajet associées au moins à un type d'interface hertzienne prise en charge par différentes stations de base dans au moins deux cellules de la pluralité de cellules.

16. Système de communication cellulaire selon la revendication 15, comprenant en outre :
un moyen (114, 46 à 52) pour exploiter de façon sélective une unité d'abonné dans un mode d'interface hertzienne qui n'est pas commun avec ladite première interface hertzienne utilisée pour évaluer l'environnement d'interférence, le moyen d'exploitation sélective réagissant auxdites perte de trajet.

17. Système de communication cellulaire selon la revendication 14, 15 ou 16, comprenant en outre :
un chronomètre (118) pour minuter la durée des événements de perte de trajet ;
un moyen (114) pour déterminer si la durée d'un événement de perte de trajet indique un état d'évanouissement ; et
un moyen (114) pour exploiter de façon sélective les unités d'abonné dans un mode d'émission à forte puissance en réponse à la détermination du fait que des abonnés individuels font l'objet d'une condition d'évanouissement.

18. Système de communication cellulaire selon la revendication 17, dans lequel le mode d'émission à forte puissance est un mode à spectre étalé pris en charge sur une interface hertzienne à large bande comportant une réutilisation de fréquence universelle sur une multiplicité de cellules.

19. Système de communication cellulaire selon l'une quelconque des revendications 14 à 18, comprenant en outre :
un moyen pour démarrer la communication dans un mode à bande étroite ;
un moyen pour évaluer l'environnement d'interférence dans le mode à bande étroite ; et
un moyen pour faire passer la communication dans un mode à large bande lorsque l'environnement d'interférence du mode à bande étroite est estimé suffisant pour prendre en charge l'exploitation de l'unité d'émetteur-récepteur dans le mode à large bande.

20. Système de communication cellulaire selon l'une quelconque des revendications 14 à 19, dans lequel le moyen de commande des paramétrages de commande de puissance est géré au niveau de l'ensemble du système depuis l'intérieur de l'infrastructure du système de communication cellulaire.

21. Système de communication cellulaire selon l'une quelconque des revendications 14 à 19, dans lequel le moyen de commande des paramétrages de commande de puissance est géré par l'unité d'émetteur-récepteur.

22. Unité d'abonné réagissant à des ressources de voies prenant en charge une pluralité de fréquences porteuses assignées pour prendre en charge au moins deux interfaces hertziennes différentes, l'unité d'abonné comprenant :
un récepteur à exploration (106) réagissant fonctionnellement de manière sélective à la pluralité de fréquences porteuses ;
un moyen pour évaluer un environnement d'interférence dû à l'utilisation d'une première interface hertzienne ; et
un moyen pour sélectionner et commander les paramétrages d'émission d'énergie ou de commande de puissance dans une deuxième interface hertzienne, en se basant sur la détermination des conditions de propagation susceptibles d'être ressenties dans la deuxième interface hertzienne, la détermination des conditions de propagation étant basée sur l'environnement d'interférence évalué.

23. Unité d'abonné selon la revendication 22, dans laquelle la deuxième interface hertzienne est un service à spectre étalé et ladite au moins une interface hertzienne comporte une interface hertzienne à bande étroite.

24. Unité d'abonné selon la revendication 23, comprenant en outre :
un moyen pour déterminer les pertes de trajet associées au moins à un type d'interface hertzienne prise en charge par différentes stations de base dans une pluralité de cellules.

25. Unité d'abonné selon la revendication 24, comprenant en outre ;
un moyen, réagissant aux déterminations de perte de trajet, pour exploiter de façon sélective l'unité d'abonné dans un mode d'interface hertzienne qui n'est pas commun avec ladite au moins une interface hertzienne utilisée pour évaluer l'environnement d'interférence.

26. Unité d'abonné selon l'une quelconque des revendications 22 à 25, comprenant en outre :
un chronomètre (118) pour minuter la durée des événements de perte de trajet ;
un moyen pour déterminer si la durée d'un événement de perte de trajet indique un état d'évanouissement ; et
un moyen pour exploiter l'unité d'abonné dans un mode d'émission à forte puissance en réponse à la détermination du fait que l'unité d'abonné fait l'objet d'une condition d'évanouissement.

27. Unité d'abonné selon la revendication 26, dans laquelle le mode d'émission à forte puissance est un mode à spectre étalé.

28. Unité d'abonné selon l'une quelconque des revendications 22 à 27, comprenant en outre :
un moyen pour démarrer la communication dans un mode à bande étroite ;
un moyen pour évaluer un environnement d'interférence dans le mode à bande étroite ; et
un moyen pour faire passer la communication dans un mode à large bande lorsque l'environnement d'interférence du mode à bande étroite est estimé suffisant pour prendre en charge l'exploitation de l'unité d'émetteur-récepteur dans le mode à large bande.

29. Unité d'abonné selon l'une quelconque des revendications 22 à 28, dans laquelle l'environnement d'interférence est évalué en relation avec des émissions de diffusion de cellules avoisinantes.

30. Unité d'abonné selon l'une quelconque des revendications 22 à 29, comprenant en outre :
un modèle prédictif projetant l'effet d'une augmentation des paramétrages d'émission d'énergie de l'unité d'abonné en relation avec un environnement d'interférence existant ;
et dans lequel le moyen de commande des paramétrages d'émission d'énergie ou de commande de puissance réagit fonctionnellement au moins au modèle prédictif.

31. Unité d'abonné selon l'une quelconque des revendications 22 à 29, comprenant en outre :
un moyen pour communiquer l'évaluation de l'environnement d'interférence à un équipement de station de base de service ; et
un moyen pour recevoir des instructions de commande de l'équipement de station de base de service pour réguler le fonctionnement du moyen de sélection et de commande des paramétrages d'émission d'énergie ou de commande de puissance.

32. Procédé de fonctionnement d'une unité d'abonné réagissant à des ressources de voies prenant en charge une pluralité de fréquences porteuses assignées pour prendre en charge au moins deux interfaces hertziennes différentes, le procédé comprenant :
l'exploration de la pluralité de porteuses des fréquences porteuses ;
l'évaluation d'un environnement d'interférence dû à l'utilisation d'une première interface hertzienne ; et
la commande des paramétrages d'émission d'énergie dans une deuxième interface hertzienne, en se basant sur la détermination des conditions de propagation susceptibles d'être ressenties dans la deuxième interface hertzienne, la détermination des conditions de propagation étant basée sur l'environnement d'interférence évalué.

33. Procédé de fonctionnement d'une unité d'abonné selon la revendication 32, comprenant en outre :
la détermination des pertes de trajet associées au moins à un type d'interface hertzienne prise en charge par différentes stations de base dans une pluralité de cellules.

34. Procédé de fonctionnement d'une unité d'abonné selon la revendication 33, comprenant en outre :
en réaction aux déterminations de perte de trajet, l'exploitation sélective de l'unité d'abonné dans un mode d'interface hertzienne qui n'est pas commun avec ladite au moins une interface hertzienne utilisée pour évaluer l'environnement d'interférence.

35. Procédé de fonctionnement d'une unité d'abonné selon la revendication 31, 33 ou 34, comprenant en outre :
le minutage de la durée des événements de perte de trajet ;
la détermination du fait que la durée d'un événement de perte de trajet indique un état d'évanouissement ; et
l'exploitation de l'unité d'abonné dans un mode d'émission à forte puissance en réponse à la détermination du fait que l'unité d'abonné fait l'objet d'une condition d'évanouissement.

36. Procédé de fonctionnement d'une unité d'abonné selon la revendication 35, dans lequel le mode d'émission à forte puissance est un mode à spectre étalé.

37. Procédé de fonctionnement d'une unité d'abonné selon l'une quelconque des revendications 32 à 36, comprenant en outre :
le démarrage de la communication dans un mode à bande étroite ;
l'évaluation d'un environnement d'interférence dans le mode à bande étroite ; et
le passage de la communication dans un mode à large bande lorsque l'environnement d'interférence du mode à bande étroite est estimé suffisant pour prendre en charge l'exploitation de l'unité d'émetteur-récepteur dans le mode à large bande.

38. Procédé de fonctionnement d'une unité d'abonné selon l'une quelconque des revendications 32 à 37, dans lequel l'environnement d'interférence est évalué en relation avec des émissions de diffusion de cellules avoisinantes.

39. Procédé de fonctionnement d'une unité d'abonné selon l'une quelconque des revendications 32 à 38, comprenant en outre :
la génération d'un modèle prédictif projetant l'effet d'une augmentation des paramétrages d'émission d'énergie de l'unité d'abonné en relation avec un environnement d'interférence existant ;
et dans lequel le moyen de commande des paramétrages d'émission d'énergie ou de commande de puissance réagit fonctionnellement au moins au modèle prédictif.

40. Procédé de fonctionnement d'une unité d'abonné selon l'une quelconque des revendications 32 à 39, comprenant en outre :
la communication de l'évaluation de l'environnement d'interférence à un équipement de station de base de service ; et
la réception des instructions de commande de l'équipement de station de base de service pour réguler le fonctionnement du moyen de sélection et de commande des paramétrages d'émission d'énergie ou de commande de puissance.

41. Élément de programme informatique comprenant un moyen de code de programme informatique pour faire exécuter par un contrôleur d'un dispositif d'abonné cellulaire une procédure pour exécuter un procédé selon l'une quelconque des revendications 32 à 40.

42. Élément de programme informatique selon la revendication 41, inscrit sur un support lisible par un ordinateur.
